# EUROPÄISCHE PATENTSCHRIFT

(11) **EP 1 392 887 B1**
(45) Veröffentlichungstag und Bekanntmachung des Hinweises auf die Patenterteilung: **03.01.2007**
(21) Anmeldenummer: 02743134.5
(22) Anmeldetag: 31.05.2002
(51) Int. Cl.: C23C 22/86, C02F 1/44, B01D 61/04, B01D 65/06

(54) **VERHINDERUNG VON MEMBRANVERBLOCKUNG BEI DER ABWASSERAUFBEREITUNG BEI DER PHOSPHATIERUNG**
PREVENTING A MEMBRANE FROM BLOCKING UP DURING THE TREATMENT OF WASTE WATER DURING PHOSPHATIZATION
PROCEDE PERMETTANT D'EMPECHER L'ENCRASSEMENT DE LA MEMBRANE LORS DU TRAITEMENT DES EAUX USEES RESULTANT DE LA PHOSPHATATION

(30) Priorität: 08.06.2001 DE 10127918; 01.09.2001 DE 10142933; 14.02.2002 DE 10205982
(43) Veröffentlichungstag der Anmeldung: 03.03.2004
(73) Patentinhaber: Henkel Kommanditgesellschaft auf Aktien, 40589 Düsseldorf (DE)
(72) Erfinder: BROUWER, Jan-Willem, 47877 Willich (DE); KUHM, Peter, 40724 Hilden (DE); PEIROW, Iradj, 47802 Krefeld (DE)
(86) Internationale Anmeldenummer: PCT/EP2002/005963
(87) Internationale Veröffentlichungsnummer: WO 2002/101115

(56) Entgegenhaltungen:
- EP-A- 1 106 711
- WO-A-99/48819
- DE-A- 10 043 927
- MULDER M.: "Basic Principles of Membrane Technology" 1990 , KLUWER , DORDRECHT, NL XP002217734 Seite 309, Absatz 2 -Seite 311, Absatz 1
- TRAGARDH G: "MEMBRANE CLEANING" DESALINATION, ELSEVIER SCIENTIFIC PUBLISHING CO, AMSTERDAM, NL, Bd. 71, Nr. 3, 1. März 1989 (1989-03-01), Seiten 325-335, XP000087751 ISSN: 0011-9164

## Beschreibung

Die Erfindung liegt auf dem Gebiet der Phosphatierung von Metalloberflächen, wie sie als verbreitete Korrosionsschutzmaßnahme in der metallverarbeitenden Industrie wie beispielsweise der Automobiiindustrie und der Haushaltsgeräteindustrie, jedoch teilweise auch in Stahlwerken durchgeführt wird. Sie betrifft ein Verfahren zur Aufbereitung des Überlaufs der Phosphatierbäder und/oder des Spülwassers nach der Phosphatierung. Das Verfahren vereinfacht die Abwasserbehandlung und ermöglicht in einer bevorzugten Ausführungsform die Rückführung von Badinhaltsstoffen in das Phosphatierbad und/oder von Wasser in den Gesamtprozeß.

Die Phosphatierung von Metallen verfolgt das Ziel, auf der Metalloberfläche festverwachsene Metallphosphatschichten zu erzeugen, die für sich bereits Korrosionsbeständigkeit verbessern und in Verbindung mit Lacken und anderen organischen Beschichtungen zu einer wesentlichen Erhöhung der Haftung und der Resistenz gegen Unterwanderung bei Korrosionsbeanspruchung beitragen. Solche Phosphatierverfahren sind seit langem im Stand der Technik bekannt. Für die Vorbehandlung vor der Lackierung eigenen sich insbesondere die Niedrig-Zink-Phosphatierverfahren, bei denen die Phosphatierlösungen vergleichsweise geringe Gehalte an Zinkionen von z. B. 0,5 bis 2 g/l aufweisen. Ein wesentlicher Parameter in diesen Niedrig-Zink-Phosphatierbädern ist das Gewichtsverhältnis Phosphationen zu Zinkionen, das üblicherweise im Bereich > 12 liegt und Werte bis zu 30 annehmen kann.

Es hat sich gezeigt, daß durch die Mitverwendung anderer mehrwertiger Kationen als Zink in den Phosphatierbädern Phosphatschichten mit deutlich verbesserten Korrosionsschutz- und Lackhaftungseigenschaften ausgebildet werden können. Beispielsweise finden Niedrig-Zink-Verfahren mit Zusatz von z. B. 0,5 bis 1,5 g/l Manganionen und z. B. 0,3 bis 2,0 g/l Nickelionen als sogenannte Trikation-Verfahren zur Vorbereitung von Metalloberflächen für die Lackierung, beispielsweise für die kathodische Elektrotauchlackierung von Autokarosserien, weite Anwendung.

Eine Phosphatierlösung enthält schichtbildende Komponenten wie z.B. Zink- und ggf. weitere zweiwertige Metallionen sowie Phosphationen. Außerdem enthält eine Phosphatierlösung nichtschichtbildende Komponenten wie insbesondere Beschleuniger und deren Abbauprodukte. Die Abbauprodukte des Beschleunigers entstehen dadurch, daß dieser mit dem durch Beizreaktion an der Metalloberfläche gebildeten Wasserstoff reagiert. Die sich mit der Zeit im Phosphatierbad anreichernden nichtschichtbildenden Komponenten wie beispielsweise Alkalimetallionen und insbesondere die Abbauprodukte des Beschleunigers können aus der Phosphatierlösung nur dadurch entfernt werden, daß man ein Teil der Phosphatierlösung austrägt und kontinuierlich oder diskontinuierlich durch neue Phosphatierlösung ersetzt. Phosphatierlösung kann beispielsweise dadurch ausgetragen werden, daß man das Phosphatierbad mit einem Überlauf betreibt und den Überlauf verwirft. In der Regel ist ein Überlauf jedoch nicht erforderlich, da durch die phosphatierten Metallteile eine ausreichende Menge Phosphatierlösung als anhaftender Flüssigkeitsfilm ausgetragen und in das Spülwasser überführt wird.

Nach der Phosphatierung wird die an den phosphatierten Teilen wie beipsielsweise Automobilkarossen anhaftende Phosphatierlösung mit Wasser abgespült. Da die Phosphatierlösung Schwermetalle und ggf. weitere Inhaltsstoffe enthält, die nicht unkontrolliert in die Umwelt abgegeben werden dürfen; muß das Spülwasser einer Wasserbehandlung unterzogen werden. Dies muß in einem getrennten Schritt vor der Einleitung in eine biologische Kläranlage erfolgen, da sonst die Funktionsfähigkeit der Kläranlage gefährdet würde.

Da sowohl die Entsorgung des Abwassers (aus Phosphatierbadüberlauf und/oder Spülwasser) als auch die Versorgung der Phosphatieranlage mit Frischwasser Kostenfaktoren sind, besteht ein Bedarf, diese Kosten zu minimieren. Die DE-C-44 20 760 beschreibt ein Verfahren und eine Anlage zur Wiederaufbereitung oder Aufkonzentration verbrauchter tensidhaltiger Eisenphosphatierbäder. Hierbei handelt es sich also nicht um eine Zinkphosphatierung wie vorstehend beschrieben, die auf den behandelten Metalloberflächen kristalline zinkhaltige Phosphatschichten erzeugt. Vielmehr beschreibt dieses Verfahren eine Eisenphosphatierung, bei der auf Eisenoberflächen amorphe Schichten von Eisenphosphat und Eisenoxiden entstehen. Setzt man der Eisenphosphatierlösung Tenside zu, so wirkt diese gleichzeitig als Reiniger. In dem genannten Dokument geht es um die Wiederaufbereitung einer solchen tensidhaltigen Eisenphosphatierlösung durch eine Ultrafiltration. Diese wird derart durchgeführt, daß die Tenside überwiegend als Retentat zurückgehalten werden. Das Permeat enthält die Metallionen und muß entsorgt werden. Die im Retentat zurückgehaltenen Tenside können durch die weiteren Komponenten der Eisenphosphatierlösung ergänzt und dem Phosphatierbad wieder zugeführt werden. Nach diesem Verfahren kann man einen Teil der Wirkstoffe in die Eisenphosphatierlösung zurückführen und die Ab- und Frischwassermengen vermindern.

Die EP-A-414 301 betrifft ein abwasserfrei arbeitendes Verfahren zur Erzeugung von Phosphatüberzügen auf Metalloberflächen mittels wäßriger, Eisen(II)- und Nitrationen enthaltender Zinkphosphatlösungen. Dabei wird dem Phosphatierbad eine Spülbadkaskade aus mindestens 2 Spülbädern nachgeschaltet, salzarmes, vorzugsweise salzfreies Wasser in das letzte Spülbad gespeist, der Wasserüberlauf in das jeweils vorausgehende Spülbad bzw. das Phosphatierbad geleitet und dem Phosphatierbad mindestens so viel salzarmes bzw. salzfreies Wasser entzogen, daß es das mit Phosphat angereicherte Spülwasser aus der Kaskade aufnehmen kann. Hierbei läßt es sich jedoch nicht vermeiden, daß sich unerwünschte Inhaltsstoffe wie beispielsweise Abbauprodukte des Beschleunigers im Phosphatierbad anreichern.

Die DE-A-198 13 058 beschreibt ein Verfahren zur Aufbereitung von Phosphatierbadüberlauf und/oder von Spülwasser nach der Phosphatierung, wobei die Phosphatierung mit einer sauren wäßrigen Phosphatierlösung erfolgt, die 3 bis 50 g/l Phosphationen, berechnet als PO₄³⁻, 0,2 bis 3 g/l Zinkionen, gegebenenfalls weitere Metallionen sowie Beschleuniger enthält, wobei der Phosphatierbadüberlauf und/oder das Spülwasser einer Nanofiltration unterworfen wird.

Die EP 1 106 711 A, fallend unter Art. 54(3) EPÜ, beschreibt ein Verfahren zum Aufbereiten von Spülwasser nach einer Phosphatierung, wobei das Spülwasser einer zweistüfigen Umkehrosmose unterworfen wird und wobei man dem Spülwasser einer Säure in einer solchen Menge zugibt, daß der pH-Wert des Spülwassers auf einen Bereich zwischen 2,0 und 3,0 abgesenkt wird, und das Retentat der ersten Umkehrosmosestufe dem Phosphatierbad zugeführt wird.

Beim praktischen Betrieb dieses Verfahrens beobachtet man jedoch eine Verblockung der Filtrationsmembran innerhalb weniger Stunden. Dies kann darauf zurückgeführt werden, daß der im Spülwasser nach der Phosphatierung und im Phosphatierbadüberlauf enthaltene Phosphatschlamm durch technisch übliche Filtrationsverfahren wie zum Beispiel durch Verwendung von Beutel- oder Sandfilter nicht vollständig aus der Lösung entfernt werden kann. Bei der Membranfiltration setzt sich der Restschlamm auf der Membran ab und verblockt diese. Daher stellt sich die Aufgabe, das Membranfiltrationsverfahren so zu verbessern, daß ein Verblocken der Membran durch Phosphatschlamm verzögert oder verhindert wird. Eine alternative Aufgabenstellung besteht darin, bereits aufgetretene Verblockungen zu beseitigen. Dabei sollen die zu ergreifenden Maßnahmen so ausgewählt werden, daß sie nicht zu einem erhöhten Anfall an Abwasser oder zu einer zusätzlichen Belastung von Abwasser mit Schwermetallen führen. Vielmehr soll das Verfahren so ausgestaltet werden, daß Wertstoffe im Spülwasser oder im Phosphatierbadüberlauf, insbesondere schichtbildende Metallionen wie beispielsweise Zink-, Nickel- und/oder Manganionen in den Phosphatierprozeß zurückgeführt werden können. Weiterhin wird angestrebt, möglichst viel Wasser in den gesamten Verfahrensprozeß zurück zu führen und hierdurch den Wasserverbrauch zu verringern.

Die vorliegende Erfindung betrifft ein Verfahren zum Aufbereiten von Phosphatierbadüberlauf oder Spülwasser nach einer Phosphatierung mit einer Phosphatierlösung, die 3 bis 50 g/l Phosphationen und 0,2 bis 3 g/l Zinkionen enthält, wobei der Phosphatierbadüberlauf oder das Spülwasser einer Membranfiltration unterworfen wird und wobei das Retentat der Membranfiltration in einem Retentatkreislauf gefahren werden kann, dadurch gekennzeichnet, daß man
i) dem Phosphatierbadüberlauf, dem Spülwasser oder dem Retentatkreislauf vor der Membranfiltration ein Reagenz zur Verzögerung der Membranverblockung zugibt, das ausgewählt ist aus
   a) 0,01 bis 5 g/l eines Komplexbildners für Schwermetalle
   b) einer Säure in einer solchen Menge, daß der pH-Wert des Spülwassers auf einen Bereich zwischen 0,5 und 2,5 abgesenkt wird,
      wobei man in diesem Falle das Retentat der Membranfiltration zumindest anteilig in die Phosphatierlösung zurückführt, nachdem man durch Zugabe von Hydroxylamin oder eines Oxids oder eines Carbonats von Zink, Nickel und/oder Mangan den pH-Wert des Retentats auf einen Wert im Bereich von 2,55 bis 3,0 angehoben hat, und/oder,
ii) die Membranfiltration zu ausgewählten Zeitpunkten unterbricht und die Membran mit einer wäßrigen Lösung einer Säure b) behandelt, die einen pH-Wert im Bereich zwischen 0 und 1,8 aufweist, und daß man die wäßrige Lösung der Säure b) nach Kontakt mit der Filtrationsmembran verwendet, um sie beim anschließenden Verfahren nach Alternative i) dem Phosphatierbadüberlauf, dem Spülwasser oder dem Retentatkreislauf als Reagenz zur Verzögerung der Membranverblockung in einer solchen Menge zuzugeben, daß der pH-Wert des Phosphatierbadüberlaufs oder des Spülwassers auf einen Bereich zwischen 0,5 und 2,5 abgesenkt wird.

Nach der Alternative i) wird also das Spülwasser bzw. der Phosphatierbadüberlauf vor der Membranfiltration so konditioniert, daß keine oder allenfalls eine verzögerte Verblockung der Membran durch Phosphatierschlamm eintritt. Dies kann dadurch geschehen, daß man dem Phosphatierbadüberlauf oder dem Spülwasser vor der Membranfiltration einen oder mehrere Komplexbildner für Schwermetalle und/oder eine Säure in einer solchen Menge zugibt, daß der pH-Wert auf den genannten Bereich abgesenkt wird. Dieses Ansäuern von frischem Phosphatierbadüberlauf oder von Spülwasser kann dadurch erfolgen, daß man diesem direkt die erforderliche Säuremenge zugibt. Bei der Anwendung von Membranverfahren wird das Retentat meistens in einem Kreislauf gefahren. Nur ein Teil des Retentats wird entfernt. Eine Dosierung von Säure oder Komplexbildnern ist auch im Retentatkreislauf möglich. Das Retentat enthält dann bereits Säure oder Komplexbildner. Bei dieser Verfahrensweise ist es dann nur erforderlich, eine solche Menge an frischem Komplexbildner und/oder Säure zuzugeben, daß die vorstehend genannten Bedingungen für Komplexbildnergehalt und/oder pH-Wert erreicht werden.

Gemäß der Alternative ii) verfährt man so, daß man den Phosphatierbadüberlauf oder das Spülwasser nicht oder nicht so vollständig wie gemäß i) konditioniert, sondern eine sich aufbauende Membranverblockung rechtzeitig, d. h., bevor der Membranfluß eine vorbestimmte Mindestmenge unterschreitet, dadurch wieder beseitigt, daß man die Membranfiltration kurzzeitig unterbricht und die Filtrationsmembran mit einer wäßrigen Lösung einer Säure entsprechend der Alternative i, b) behandelt, die einen pH-Wert im Bereich zwischen 0 und etwa 1,8 aufweist. Der pH-Wert muß so gewählt werden, daß auf der Membran abgelagerter Phosphatschlamm aufgelöst wird. Sobald auf diese Weise die Membran wieder durchgängig gemacht ist, kann die Aufarbeitung von Phosphatierbadüberlauf oder von Spülwasser über diese Membran fortgesetzt werden.

Gemäß einem Teilaspekt der Aufgabenstellung verwendet man in dem erfindungsgemäßen Verfahren zum Aufrechterhalten des Permeatflusses vorzugsweise nur solche Substanzen, die in das Phosphatierbad zurückgeführt werden können und dort zumindest nicht stören, vorzugsweise jedoch sogar Wirkstoffe darstellen. Demgemäß verwendet man als Säuren b) unabhängig davon, ob diese gemäß Verfahrensalternative i) oder ii) eingesetzt werden, vorzugsweise solche, die in technisch üblichen Phosphatierbädern Wertstoffe darstellen. Dies sind insbesondere Phosphorsäure, Fluorwasserstoffsäure und Säuren, deren Säurereste komplexe Fluoride von Bor, Silicium, Titan oder Zirkon darstellen. Sofern das Phosphatierbad als Beschleuniger oder Co-Beschleuniger Nitrationen enthalten soll oder darf, ist auch Salpetersäure geeignet.

Sofern man gemäß Variante a) Komplexbildner für Schwermetalle einsetzt, wählt man diese vorzugsweise aus Hydroxycarbonsäuren oder deren wasserlöslichen Salzen aus, bei denen die Summe von Hydroxylgruppen (die nicht Teil einer Carboxylgruppe sind) und Carboxylgruppen im Molekül mindestens 3 beträgt. Beispiele derartiger Säuren sind Citronensäure, Weinsäure oder Zuckersäuren wie beispielsweise Gluconsäure.

Gemäß einem Teilaspekt der Aufgabenstellung soll das erfindungsgemäße Verfahren so betrieben werden, daß der Gesamt-Wasserverbrauch des Phosphatierprozesses einschließlich der erforderlichen Reinigungs- und Spülschritte minimiert wird oder daß zumindest möglichst wenig Wertstoffe der Phosphatierung zusammen mit Abwasser ausgetragen werden. Um die Wertstoffe wie beispielsweise schichtbildende Kationen möglichst vollständig in den Phosphatierprozeß zurückzuführen, kann man in dem erfindungsgemäßen Verfahren nach Alternative i) vorgehen und dabei das Permeat der Membranfiltration über einen schwach sauren Ionenaustauscher leiten. Bei geeigneter Konditionierung bindet dieser zumindest Zink- und/oder Nickelionen, die bei der Regenerierung des lonenaustauschers eluiert und in den Phosphatierprozeß zurückgeführt werden können. Besonders günstige Ausführungsformen für Beladen und Regenerieren des schwach sauren lonenaustauschers sind in den deutschen Patentanmeldungen DE-A-100 56 629 und DE-A-100 56 628 beschrieben. Diese Ausführungsformen werden vorzugsweise auch im Rahmen der vorliegenden Erfindung zur Weiterbehandlung des Permeats der Membranfiltration eingesetzt. Bei dieser Verfahrensvariante mit nachgeschaltetem Ionenaustausch erhält man hinter dem Ionenaustauscher eine Wasserphase, die direkt in eine Kläranlage eingeleitet werden kann. Im Sinne einer Einsparung von Wasser verfährt man jedoch vorzugsweise so, daß man die Wasserphase nach dem Ionenaustauscher für Spülzwecke wieder verwendet.

Eine alternative Maßnahme zum Minimieren des Gesamt-Wasserverbrauchs besteht darin, daß man nach Alternative i) verfährt und das Permeat der Membranfiltration auf einen pH-Wert im Bereich zwischen 6 und 8 einstellt und als Spülwasser nach der Reinigung der zu phosphatierenden Metalloberflächen, also zwischen Reinigung und Phosphatierung, einsetzt. Aus ökonomischen Gründen verwendet man zum Einstellen des pH-Werts vorzugsweise Natronlauge.

Eine Alternative zu der direkt vorstehend genannten Verfahrensweise besteht darin, daß man das Permeat der Membranfiltration auf einen pH-Wert im Bereich zwischen 9 und 13 einstellt und zum Ergänzen der Reinigungslösung für die Reinigung der zu phosphatierenden Metalloberflächen einsetzt. Auch hierfür verwendet man zum Einstellen des pH-Werts vorzugsweise Natronlauge.

Das Retentat der Membranfiltration enthält schichtbildende Kationen wie beispielsweise Zink-, Nickel- und/oder Manganionen. Da diese Wertstoffe für die Phosphatierung darstellen, arbeitet man das Retentat vorzugsweise so auf, das es zumindest anteilig in das Phosphatierbad zurückgeführt wird. In einer möglichen Ausführungsform erfolgt dies derart, daß man das Retentat als Grundlage zur Herstellung einer Ergänzungslösung für das Phosphatierbad verwendet und so mit Wirkstoffen (beispielsweise mit Ionen schichtbildender Metalle, mit Säuren ausgewählt aus Salpetersäure, Phosphorsäure, Fluorwasserstoffsäure oder Säuren, deren Säurereste komplexe Fluoride von B, Si, Ti oder Zr darstellen, oder auch interne Beschleuniger wie beispielsweise Hydroxylamin) versetzt, daß eine Ergänzungslösung für ein Phosphatierbad entsteht.

Man kann jedoch das Retentat auch ohne Anreicherung mit Wirkstoffen direkt in die Phosphatierlösung zurückführen. Hierbei ist jedoch darauf zu achten, daß der Gehalt an freier Säure im Phosphatierbad nicht unterhalb des zulässigen Wertes absinkt. Demnach besteht das erfindungsgemäße Verfahren darin, daß man für den Fall, das der pH-Wert des Phosphatierbadüberlaufs oder des Spülwassers vor der Membranfiltration auf einen pH-Wert im Bereich zwischen 0,5 und 2,5 abgesenkt wurde, den pH-Wert des Retentats auf einen Wert im Bereich zwischen 2,55 bis 3,0, vorzugsweise zwischen 2,6 bis 2,8, anhebt und das Retentat dann in die Phosphatierlösung zurückführt. Für dieses Anheben des pH-Werts könnte eine Lauge wie beispielsweise Natronlauge verwendet werden. Dies hätte jedoch den unerwünschten Effekt, daß sich im Phosphatierbad Salze anreichern, die keine Wirkstoffe der Phosphatierung darstellen und das Phosphatierbad unnötig belasten. Daher verwendet man zum Anheben des pH-Werts Stoffe, die Wirkstoffe für das Phosphatierbad enthalten, und ausgewählt sind aus dem als Phosphatierbeschleuniger wirkenden Hydroxylamin, und den der Gehalt der Phosphatierlösung an schichtbildenden Kationen ergänzenden Oxiden oder Carbonaten von Zink, Nickel und/oder Mangan.

Dabei verfährt man in einer vorgezogenen Ausführungsform nach Alternative i), wobei man zur Verhinderung der Membranverblockung während der Membranfiltration eine Säure zusetzt, die ausgewählt ist aus Salpetersäure, Phosphorsäure, Fluorwasserstoffsäure und Säuren, deren Säurereste komplexe Fluoride von B, Si, Ti oder Zr darstellen. Die bevorzugte Ausführung dieses Verfahrens ist dadurch gekennzeichnet, daß
a) man mindestens einen ersten und einen zweiten Pufferbehälter vorsieht, in die das Retentat (= Konzentrat) der Membranfiltration geleitet werden kann,
b) wobei man für eine vorgewählte Zeitdauer oder bis der erste Pufferbehälter gefüllt ist das Retentat der Membranfiltration mindestens teilweise in den ersten Pufferbehälter leitet,
c) nach Ablauf der vorgewählten Zeitdauer oder wenn der erste Pufferbehälter gefüllt ist
d) die Einleitung des Retentats in den ersten Pufferbehälter beendet und das Retentat mindestens teilweise in den zweiten Pufferbehälter leitet,
e) den Wert mindestens eines für die Zusammensetzung des Inhalts des ersten Pufferbehälters charakteristischen Parameters bestimmt und
f) eine solche Menge von Ergänzungschemikalien in den ersten Pufferbehälter gibt, daß der Wert des charakteristischen Parameters derart geändert wird, daß der Inhalt des ersten Pufferbehälters als Ergänzungslösung für die Phosphatierlösung verwendet werden kann,
g) anschließend den Inhalt des ersten Pufferbehälters in die Phosphatierlösung entleert, während man
h) das Retentat der Membranfiltration mindestens teilweise in den zweiten Pufferbehälter leitet, und
k) nach Entleeren des ersten Pufferbehälters und Ablauf der vorgewählten Zeit zum Füllen des zweiten Pufferbehälters, oder wenn dieser gefüllt ist, die Funktion von erstem und zweiten Pufferbehälter vertauscht.

Man sieht also 2 oder mehr Pufferbehälter vor, in die das Retentat der Membranfiltration geleitet werden kann. Bei geeigneter Dimensionierung reichen 2 Pufferbehälter aus. Man leitet das Retentat der Membranfiltration anteilig oder vorzugsweise vollständig in den ersten Pufferbehälter, bis eine vorgewählte Zeitdauer verstrichen ist oder bis der erste Pufferbehälter gefüllt ist. Die vorgewählte Zeitdauer kann beispielsweise im Bereich von 8 bis 120 Stunden, vorzugsweise im Bereich von 16 bis 24 Stunden liegen. Dabei stellt man vorzugsweise Pufferbehälter mit einem solchen Fassungsvermögen zur Verfügung, daß das gesamte während der genannten Zeitspanne anfallende Retentat der Membranfiltration in einen Pufferbehälter geleitet werden kann. Wenn die vorgewählte Zeitdauer verstrichen ist oder wenn der erste Pufferbehälter gefüllt ist, beendet man das Einleiten des Retentats in diesen Pufferbehälter und leitet es stattdessen in den zweiten Pufferbehälter. Das Fassungsvermögen des zweiten Pufferbehälters und die Einleitungsdauer wählt man vorzugsweise so, daß sie dem Fassungsvermögen des ersten Pufferbehälters und der Einleitungsdauer in diesen entsprechen. Während das Retentat in den zweiten Pufferbehälter geleitet wird, analysiert man den Inhalt des ersten Pufferbehälters, indem man den Wert mindestens eines für die Zusammensetzung des Inhalts charakteristischen Parameters bestimmt. Dies kann im einfachsten Falle der pH-Wert sein. Alternativ oder ergänzend hierzu kann man den Gehalt an freier Säure oder Gesamtsäure oder den Gehalt an einem oder mehreren zweiwertigen Kationen, die beim Phosphatierprozeß in die Phosphatschicht eingebaut werden, bestimmen. Diese zweiwertigen Kationen können beispielsweise ausgewählt sein aus den Kationen von Zink, Nickel und Mangan. Den Gehalt an freier Säure bestimmt man, wie dem Fachmann auf dem Phosphatiergebiet bekannt, beispielsweise dadurch, daß man eine Probe von 10 ml, erwünschtenfalls nach Verdünnen mit Wasser, mit 0,1 n-Natronlauge bis zu einem pH-Wert von 3,6 titriert. Der Verbrauch an Natronlauge in ml gibt die Punktzahl der freien Säure an. In analoger Weise bestimmt man den Gehalt an Gesamtsäure, indem man die Probe bis zu einem pH-Wert von 8,5 titriert. Anstelle der genannten pH-Werte kann man für den Gehalt an freier Säure bis zum Umschlagspunkt von Methylorange, für den Gehalt an Gesamtsäure bis zum Umschlagspunkt von Phenolphthalein titrieren.

Danach gibt man eine solche Menge von Ergänzungschemikalien in den ersten Pufferbehälter und vermischt diese mit dessen Inhalt bzw. läßt sie mit dessen Inhalt reagieren, so daß der Wert des gewählten charakteristischen Parameters derart geändert wird, daß der Inhalt des ersten Pufferbehälters als Ergänzungslösung für die Phosphatierlösung verwendet werden kann. Wählt man beispielsweise als charakteristischen Parameter den pH-Wert, der aufgrund des Ansäuern des Spülwassers bzw. des Phosphatierbad-Überlaufs vor der Membranfiltration geringer ist als der pH-Wert der Phosphatierlösung, gibt man eine solche Menge mindestens einer neutralisierenden Ergänzungschemikalie zu, daß ein pH-Wert im Bereich von 2,6 bis 3,6 erhalten wird. Durch diese Einstellung des pH-Werts ist der Inhalt des ersten Pufferbehälters als Ergänzungslösung für die Phosphatierlösung geeignet. Dabei gibt man als alkalische Ergänzungschemikalie vorzugsweise Zink- und/oder Mangancarbonat zu, vorzugsweise in Form einer wäßrigen Aufschlämmung. Hierdurch wird nicht nur der pH-Wert angehoben, sondern es wird auch die Konzentration an Zink und/oder Mangan erhöht, so daß danach der Inhalt des ersten Pufferbehälters besser als Ergänzungslösung für die Phosphatierlösung geeignet ist als wenn man den pH-Wert mit einer Alkalilauge oder mit Alkalicarbonat einstellen würde.

Nachdem der Inhalt des ersten Pufferbehälters derart vorbereitet wurde, entleert man ihn in die Phosphatierlösung. Vorzugsweise geschieht dies dadurch, daß man den Inhalt des ersten Pufferbehälters kontinuierlich in die Phosphatierlösung überführt, beispielsweise mit Hilfe einer Rohrleitung und einer Pumpe. Dabei wählt man die Geschwindigkeit für das Überführen in die Phosphatierlösung vorzugsweise derart, daß der erste Pufferbehälter gerade dann vollständig entleert ist, wenn entweder die vorgewählte Zeitspanne zum Füllen des zweiten Pufferbehälters verstrichen oder wenn der zweite Pufferbehälter gefüllt ist. Hierdurch wird gewährleistet, daß sich weder das Volumen der Phosphatierlösung noch deren Zusammensetzung unerwünscht rasch verändern. Andererseits steht der erste Pufferbehälter genau dann wieder zur Aufnahme von Retentat der Membranfiltration zur Verfügung, wenn das Einleiten des Retentats in den zweiten Pufferbehälter beendet werden soll. Danach vertauscht man die Funktion von erstem und zweitem Pufferbehälter. Dies heißt, daß man nun wieder den ersten Pufferbehälter mit Retentat aus der Membranfiltration füllt, während man, wie vorstehend für den ersten Pufferbehälter beschrieben, die Zusammensetzung des Inhalts des zweiten Pufferbehälters bestimmt, so abändert, daß der Inhalt in die Phosphatierlösung überführt werden kann, und den Inhalt des zweiten Pufferbehälters in die Phosphatierlösung überführt, während der erste Pufferbehälter wieder gefüllt wird.

Bei dieser Verfahrensweise reichen 2 Pufferbehälter aus. Selbstverständlich kann man zur Sicherheit einen dritten Pufferbehälter bereitstellen, in den man dann Retentat der Membranfiltration leitet, wenn der zweite Pufferbehälter bereits voll, der erste jedoch noch nicht vollständig entleert ist. Ansonsten verfährt man bei Verwendung von mehr als 2 Pufferbehältern analog zu der vorstehend beschriebenen Verfahrensweise, wobei jeder Pufferbehälter abwechselnd mit Retentat der Membranfiltration gefüllt und in die Phosphatierlösung entleert wird.

Durch diese Verfahrensweise werden die im Spülwasser nach der Phosphatierung oder im Phosphatierbad-Überlauf vorhandenen schichtbildenden zweiwertigen Kationen wieder in die Phosphatieriösung zurückgeführt. Der Kreislauf für diese Kationen wird also weitgehend geschlossen. Dabei verwendet man zum Ansäuern des Spülwassers bzw. des Phosphatierbad-Überlaufs vor der Membranfiltration vorzugsweise Phosphorsäure, da diese Säure eine Hauptkomponente der Phosphatierlösung darstellt.

In einer weiteren Fortbildung des erfindungsgemäßen Verfahrens verfährt man ebenfalls nach der beschriebenen Alternative i) und stellt das Permeat der Membranfiltration auf einen pH-Wert im Bereich zwischen 6 und 13 ein und verwendet es anschließend zum Ergänzen einer Reinigungslösung für die Reinigung der zu phosphatierenden Metalloberflächen, wobei man dem Permeat der Membranfiltration eines oder mehrere Tenside zugibt. Für das Einstellen des pH-Wertes verwendet man vorzugsweise Natron- oder Kalilauge. Vorzugsweise stellt man den pH-Wert auf den Bereich zwischen 9 und 13 ein. Die Tenside sind vorzugsweise ausgewählt aus nichtionischen Tensiden, beispielsweise Ethoxylaten und/oder Propoxylaten von Alkylalkoholen oder Alkylaminen mit 8 bis 22 C-Atomen in der Alkylkette. Vorzugsweise verwendet man hierbei Ethoxylate und/oder Propoxylate solcher Alkylalkohole oder Alkylamine, die aus pflanzlichen oder tierischen Fetten oder Ölen erhältlich sind.

Erforderlichenfalls kann man dem Permeat der Membranfiltration zusätzlich zu den Tensiden auch Buildersubstanzen zugeben. Vorzugsweise sind diese ausgewählt aus der Gruppe der wasserlöslichen Borate, Silicate, Carbonate, Triphosphate oder Pyrophosphate. Die Kationen dieser Salze stellen vorzugsweise Natrium- und/oder Kaliumionen dar.

In dieser Ausführungsform kann man das Permeat der Membranfiltration kontinuierlich auf einen pH-Wert im genannten Bereich einstellen, mit Tensid versetzen und in einer Reinigungslösung für die Reinigung der zu phosphatierenden Metalloberflächen leiten. Man kann aber auch hier wieder, entsprechend der vorstehend beschriebenen Verfahrensweise bei der Verwendung des Retentats zum Ergänzen der Phosphatierlösung, das Permeat in einen Pufferbehälter leiten. Nach Füllen des Pufferbehälters mit Permeat der Membranfiltration erhöht man den pH-Wert und gibt Tensid zu. Danach entleert man den Inhalt des Pufferbehälters in die genannte Reinigungslösung. Entsprechend der weiter oben beschriebenen Verfahrensweise können auch hierbei 2 oder mehr Pufferbehälter vorgesehen werden, die abwechselnd gefüllt und entleert werden.

Die Verfahrensweise nach Alternative i) erlaubt es, die Filtrationsmembran wesentlich länger zu betreiben als bisher bei der Aufarbeitung von Abwasser aus der Phosphatierung üblich. Jedoch ist es auch hier empfehlenswert, nach längeren Zeitabständen die Membran sauer oder alkalisch zu reinigen. Hierbei geht man vorzugsweise so vor, daß die bei der Reinigung von der Membran abgelösten Bestandteile der Phosphatierlösung wie beispielsweise Zinkionen nicht verworfen werden, sondern letztlich in die Phosphatierlösung zurückgeführt werden. Beispielsweise kann man so vorgehen, daß nach Alternative i) verfahren wird, wobei man bei Unterschreiten eines vorgewählten Membranflusses oder nach Ablauf einer vorgewählten Zeit das Verfahren unterbricht und die Membran mit einer alkalischen Lösung mit einem pH-Wert im Bereich von 8 bis 14 reinigt. Das bei dieser Reinigung anfallende Permeat wird entweder dazu verwendet, bei weiterer Verfahrensweise nach Alternative i) den pH-Wert des anfallenden sauren Permeats anzuheben. Oder das Permeat kann dazu verwendet werden, eine Reinigerlösung zum Reinigen der zu phosphatierenden Teile vor der Phosphatierung anzusetzen oder zu ergänzen.

Dieser alkalische Reinigungsschritt kann beispielsweise dann durchgeführt werden, wenn der Membranfluß auf weniger als 20 % des Wertes für eine neue oder eine frisch gereinigte Membran abfällt. Alternativ hierzu kann man eine Zeitdauer für den Betrieb nach Alternative i) vorwählen, nach deren Ablauf der genannte alkalische Reinigungsschritt durchgeführt wird. Diese Zeitdauer kann beispielsweise zwischen einem und 12 Monaten liegen. Die optimale Zeitdauer muß vor Ort empirisch bestimmt werden. Bei Verwendung einer Desal™ D5 Membran genügt es, diese Membran alle 4 bis alle 8 Monate alkalisch zu reinigen. Hierfür eignet sich beispielsweise eine alkalische Reinigerlösung, die durch Verdünnen eines Konzentrats mit Wasser auf 0,05 % erhalten wird, wobei das Konzentrat folgende Zusammensetzung in Gew.-% aufweist: Natriumhydroxid 84,5 %, Natriumgluconat 10 %, Pentanatriumtriphosphat 5 %, Tensid 0,5 %. Die verdünnte Reinigungslösung hat einen pH-Wert im Bereich von 10,5 und wird vorzugsweise mit einer Temperatur von etwa 30 °C zur Membranreinigung eingesetzt.

Dabei führt man die Reinigung der Membran mit der alkalischen Lösung vorzugsweise derart durch, daß 70 bis 90 Vol.-% der alkalischen Lösung als Permeat die Membran durchdringen. Das verbleibende Retentat wird vorzugsweise einer Abwasserbehandlung zugeführt und entsorgt. Das alkalische Permeat kann dafür verwendet werden, beim nach der Reinigung wieder aufgenommenen Verfahren nach Alternative i) oder bei einem parallel zur Reinigung einer Membran ablaufenden Verfahren nach Alternative i) mit einer zweiten Membran den pH-Wert des sauren Permeats anzuheben. Der Zweck dieses Schrittes wurde weiter oben erläutert. Hierdurch werden Wirkstoffe in den Gesamtprozeß zurückgeführt. Alternativ hierzu kann man das bei der Membranreinigung anfallende alkalische Permeat dazu verwenden, eine Reinigerlösung zum Reinigen der zu phosphatierenden Teile vor deren Phosphatierung anzusetzen oder zu ergänzen. In diesem Fall werden die reinigungsaktiven Bestandteile der Membran-Reinigerlösung in die Reinigerlösung vor der Phosphatierung zurückgeführt und hierdurch wiederverwendet. Unabhängig von der gewählten Alternative vermindert die Rückführung des bei der Reinigung anfallenden Permeats einerseits den Rohstoffbedarf und andererseits die zu entsorgende Abfallmenge.

Anstelle oder im Wechsel mit der vorstehend beschriebenen alkalischen Membranreinigung kann gemäß Verfahrensalternative ii) des im Anspruch 1 beanspruchten Verfahrens eine saure Reinigung durchgeführt werden. Eine saure Reinigung hat zur Folge, daß sich auf der Membran abgelagerter Phosphatschlamm auflöst. Hierdurch entsteht eine Lösung, die - wenn auch geringe - Mengen an schichtbildenden Kationen wie beispielsweise Zink-, Nickel- und/oder Manganionen enthält. Diese Lösung kann einer Abwasserbehandlung zugeführt werden. Bevorzugt ist es jedoch, diese von der Membran herunter gelösten schichtbildenden Kationen wieder in den Phosphatierprozeß zurück zu führen. Hierfür geht man vorzugsweise so vor, daß man in dem erfindungsgemäßen Verfahren abwechselnd nach Alternative i) und nach Alternative ii) verfährt. Man betreibt also den Prozeß vorwiegend gemäß Alternative i). Sollte sich trotz diesem Verfahren mit der Zeit der Membranfluß deutlich verringern, unterbricht man kurzzeitig diese Fahrweise und verfährt nach Alternative ii). Dabei verwirft man die wäßrige Lösung der Säure nach Kontakt mit der Filtrationsmembran nicht, sondern man lagert sie, beginnt wieder mit dem Verfahren nach Alternative i) und verwendet die gelagerte Säurelösung dazu, um sie in der Verfahrensweise nach Alternative i) dem Phosphatierbadüberlauf oder dem Spülwasser als Reagenz zur Verzögerung der Membranverblockung in einer solchen Menge zuzugeben, daß der pH-Wert des Phosphatierbadüberlaufs oder des Spülwassers auf einen Bereich zwischen 0,5 und 2,5 abgesenkt wird. Die gemäß Verfahrensalternative ii) eingesetzte Säure und die durch diese von der Membran abgelösten schichtbildenden Kationen werden also letztlich gemäß den vorgezogenen Ausführungsformen der Verfahrensweise i) wieder in den Phosphatierprozeß zurück geschleust.

Unabhängig davon, welche der vorstehend beschriebenen Verfahrensweisen man auswählt, setzt man als Membranfiltration vorzugsweise eine Nanofiltration oder eine Umkehrosmose ein. Diese erlauben es, schichtbildende Kationen vorzugsweise im Retentat zurück zu halten, während das Permeat nichtschichtbildende einwertige Kationen sowie ggf. Abbauprodukte des Beschleunigers enthält, die aus dem Phosphatierbad ausgetragen werden sollen.

Nachfolgend wird näher beschrieben, im Zusammenhang mit weichen Phosphatierlösungen das erfindungsgemäße Verfahren vorzugsweise betrieben wird.

Die Zink-Gehalte der Phosphatierlösung liegen vorzugsweise im Bereich von 0,4 bis 2 g/l und insbesondere von 0,5 bis 1,5 g/l, wie sie für Niedrig-Zink-Verfahren üblich sind. Das Gewichtsverhältnis Phosphationen zu Zinkionen in den Phosphatierbädern kann in weiten Grenzen schwanken, sofern es im Bereich zwischen 3,7 und 30 liegt. Ein Gewichtsverhältnis zwischen 10 und 20 ist besonders bevorzugt

Dabei kann das Phosphatierbad außer den Zink- und Phosphationen weitere Komponenten enthalten, wie sie derzeit in Phosphatierbädern üblich sind.

Vorzugsweise werden Phosphatierlösungen eingesetzt, die weitere ein- oder zweiwertige Metallionen enthalten, die sich erfahrungsgemäß günstig auf die Lackhaftung und den Korrosionsschutz der hiermit erzeugten Phosphatschichten auswirken. Demgemäß enthält die erfindungsgemäße Phosphatierlösung vorzugsweise zusätzlich eines oder mehrere der folgenden Kationen:

| | |
|---|---|
| 0,1 | bis 4 g/I Mangan(II), |
| 0,1 | bis 2,5 g/l Nickel (II), |
| 0,2 | bis 2,5 g/l Magnesium(II), |
| 0,2 | bis 2,5 g/l Calcium(II), |
| 0,002 | bis 0,2 g/l Kupfer(II), |
| 0,1 | bis 2 g/l Cobalt(II). |

Beispielsweise enthält die Phosphatierlösung außer Zinkionen als zusätzliche Kationen 0,1 bis 4 g/l Manganionen und 0,002 bis 0,2 g/l Kupferionen und nicht mehr als 0,05 g/l, insbesondere nicht mehr als 0,001 g/l Nickelionen. Wünscht man jedoch an der herkömmlichen Trikation-Technologie festzuhalten, können Phosphatierbäder eingesetzt werden, die außer Zinkionen 0,1 bis 4 g/l Manganionen und zusätzlich 0,1 bis 2,5 g/l Nickelionen enthalten. In welcher Form die Kationen in die Phosphatierbäder eingebracht werden ist prinzipiell ohne Belang. Es bietet sich insbesondere an, als Kationenquelle Oxide und/oder Carbonate zu verwenden. Wegen der Gefahr einer Aufsalzung der Phosphatierbäder sollten vorzugsweise Salze anderer Säuren als Phosphorsäure vermieden werden.

Bei Phosphatierbädern, die für unterschiedliche Substrate geeignet sein sollen, ist es üblich geworden, freies und/oder komplexgebundenes Fluorid in Mengen bis zu 2,5 g/l Gesamtfluorid, davon bis zu 750 mg/l freies Fluorid, jeweils berechnet als F⁻, zuzusetzen. Bei Abwesenheit von Fluorid soll der Aluminiumgehalt des Bades 3 mg/l nicht überschreiten. Bei Gegenwart von Fluorid werden infolge der Komplexbildung höhere Al-Gehalte toleriert, sofern die Konzentration des nicht komplexierten Al 3 mg/l nicht übersteigt.

Außer den schichtbildenden zweiwertigen Kationen enthalten Phosphatierbäder in der Regel zusätzlich Natrium-, Kalium- und/oder Ammoniumionen zur Einstellung der freien Säure.

Phosphatierbäder, die ausschließlich der Behandlung von verzinktem Material dienen, müssen nicht notwendigerweise einen sogenannten Beschleuniger enthalten. Beschleuniger, die bei der Phosphatierung unverzinkter Stahloberflächen erforderlich sind, werden in der Technik jedoch auch häufig bei der Phosphatierung von verzinktem Material mit eingesetzt. Beschleunigerhaltige Phosphatierlösungen haben den zusätzlichen Vorteil, daß sie sowohl für verzinkte als auch für unverzinkte Materialien geeignet sind. Dies ist besonders bei der Phosphatierung von Automobilkarrosserien wichtig, da diese häufig sowohl verzinkte als auch unverzinkte Oberflächen enthalten.

Im Stand der Technik stehen für Phosphatierbäder unterschiedliche Beschleuniger zur Verfügung. Sie beschleunigen die Schichtausbildung und erleichtern die Bildung geschlossener Phosphatschichten, da sie mit dem bei der Beizreaktion entstehenden Wasserstoff reagieren. Dieser Prozeß wird als "Depolarisierung" bezeichnet. Das Entstehen von Wasserstoffblasen an der Metalloberfläche, die die Schichtausbildung stören, wird hierdurch verhindert. Im Rahmen des erfindungsgemäßen Verfahrens sind solche Beschleuniger bevorzugt, deren Neben- oder Abbauprodukte (Reaktionsprodukte mit Wasserstoff) die Nanofiltrations-membran durchdringen können. Hierdurch wird gewährleistet, daß sich diese Neben- und Abbauprodukte des Beschleunigers nicht im Phosphatierbad anreichern, sondern über das Filtrat (Permeat) der Nanofiltration zumindest teilweise aus dem System ausgetragen werden.

Insbesondere geeignet sind solche Beschleuniger, die als Neben- oder Abbauprodukte entweder Wasser oder einwertig geladene Ionen bilden, die die Nanofiltrationsmembran passieren können. Beispielsweise kann die Phosphatierlösung einen oder mehrere der folgenden Beschleuniger enthalten:

| | |
|---|---|
| 0,3 bis 4 g/l | Chlorationen |
| 0,01 bis 0,2 g/l | Nitritionen |
| 0,1 bis 10 g/l | Hydroxylamin |
| 0,001 bis 0,15 g/l | Wasserstoffperoxid in freier oder gebundener Form |
| 0,5 bis 80 g/l | Nitrationen. |

Bei der Depolarisierungsreaktion an der Metalloberfläche entstehen aus Chlorationen Chloridionen, aus Nitritionen Nitrationen und Ammoniumionen, aus Nitrationen Ammoniumionen, aus Hydroxylamin Ammoniumionen und aus Wasserstoffperoxid Wasser. Die gebildeten Anionen oder Ammoniumionen können die Nanofiltrationsmembran passieren, so daß sie im erfindungsgemäßen Verfahren zumindest teilweise aus dem Phosphatierbadüberlauf oder aus dem Spülwasser nach der Phosphatierung ausgetragen werden.

Zusammen mit oder anstelle von Chlorationen kann als Beschleuniger vorteilhafterweise Wasserstoffperoxid verwendet werden. Dieses kann als solches oder in Form von Verbindungen eingesetzt werden, die unter den Bedingungen des Phosphatierbads Wasserstoffperoxid bilden. Als Nebenprodukte sollen hierbei jedoch vorzugsweise keine mehrwertigen Ionen entstehen, da diese bei der Rückführung des Konzentrats der Nanofiltration im Phosphatierbad angereichert werden würden. Daher bieten sich als Alternative zu Wasserstoffperoxid insbesondere Alkalimetallperoxide an.

Ein im Rahmen des erfindungsgemäßen Verfahrens ebenfalls vorzugsweise zu verwendender Beschleuniger ist Hydroxylamin. Setzt man dieses in freier Form oder in Form von Hydroxylammoniumphosphaten, Hydroxylammoniumnitrat und/oder Hydroxylammoniumchlorid dem Phosphatierbad zu, entstehen ebenfalls nur Abbau- oder Nebenprodukte, die eine Nanofiltrationsmembran druchdringen können.

Für die Nanofiltration stehen im Stand der Technik unterschiedliche Membrantypen zur Verfügung. Da Phosphatierbäder und auch die entsprechenden Spülwässer sauer reagieren, sollte die eingesetzte Nanofiltrationsmembran säurestabil sein. Geeignet sind beispielsweise anorganische Membranen wie z. B. Keramikmembranen. Weiterhin können organische Polymermembranen eingesetzt werden. Insbesondere ist eine Polyamid-Membran geeignet.

Das Filtrat (Permeat) der Nano-filtration enthält bei geeigneter Anlagenauslegung und Prozeßführung nur so geringe Konzentrationen an zweiwertigen Kationen, daß deren Abwassergrenzwerte eingehalten werden können. Bei der Abwasseraufbereitung ist eine Schwermetallfällung nicht mehr erforderlich. Im Filtrat der Nanofiltration werden jedoch solche Mengen an einwertigen Kationen und Abbauprodukten des Beschleunigers ausgetragen, daß diese sich im Phosphatierbad bei einer Rückführung des Konzentrats nicht über die technisch erwünschten Konzentrationen hinaus anreichern.

Vorzugsweise betreibt man also das Verfahren derart, daß man das Konzentrat der Nanofiltration in die Phosphatierlösung zurückführt. Die im Überlauf des Phosphatierbads oder im Spülwasser vorhandenen schichtbildenden Kationen werden hierdurch zumindest nicht vollständig verworfen, sondern der Phosphatierlösung zumindest teilweise wieder zugeführt. Die Gehalte der Phosphatierlösung an diesen Kationen müssen dann nur entsprechend dem Verbrauch durch die Phosphatschichtbildung oder durch die Schlammbildung im Phosphatierbad ergänzt werden. Dies führt einerseits zu verringerten Entsorgungskosten und führt andererseits zu einer wirtschaftlicheren Fahrweise des Phosphatierbads, da weniger Inhaltsstoffe neu zugeführt werden müssen. Bei der Weiterverwendung des Permeats wie weiter oben beschrieben verringert sich der Gesamt-Wasserverbrauch des Reinigungs- und Phosphatierprozesses.

### Ausführungsbeispiel 1

Das erfindungsgemäße Verfahren unter Einsatz einer Nanofiltration wurde an einem Spülwasser nach der Phosphatierung erprobt. Das Spülwasser wurde nach einer Schlammentfernung durch Beutelfiltration (88 % des Schlamms entfernt) über eine aus Polyamid bestehende Desal™ DK-Membran nanofiltriert. Die Gehalte des Spülwassers an Zink, Nickel, Mangan und einwertigen Ionen sind in den Tabellen aufgeführt. Weiterhin enthalten die Tabellen die entsprechenden Werte im Permeat und im Konzentrat der Nanofiltration. Das Membranfiltrationsverfahren wurden derart betrieben, daß sich ein Volumenverhältnis von Konzentrat zu Filtrat wie 5 : 1 einstellte. Die weiteren Betriebsbedingungen sowie die Resultate ergeben sich aus der folgenden Zusammenstellung:

Spülwasser nach der Phosphatierung enthält:

| | | | |
|---|---|---|---|
| Zn²⁺ : | 100 mg/l | H₂PO₄⁻:1500 mg/l | organische Bestandteile: 10 mg C/l |
| Mn²⁺ : | 50 mg/l | | Schlamm: 0,05 g/l |
| Ni²⁺ : | 49 mg/l | NO₃⁻: 300 mg/l | pH: 3,8 |
| Na⁺ : | 130 mg/l | | |

### Aufbereitung Spülwasser

### Schlammfiltration durch Beutelfiltration

Filter: Lofclear™ 523 D der Firma Loeffler
Schlammentfernung: 88 %

### A. Nanofiltration Spülwasser ohne Konditionierung (Vergleich)

### Betriebsbedingungen:

Desal DK-Membran (Fa. Osmonics)
Druck: 8 bar
Temperatur: 40°C
Permeat: 15 l/m²·h
Volumenverhältnis: Konzentrat/Filtrat: 5:1

### Ergebnis:

| | Konzentrat | Filtrat |
|---|---|---|
| pH | 3,2 | 3,4 |
| Zn²⁺ (mg/l) | 500 | 3 |
| Mn²⁺ (mg/l) | 280 | 2 |
| Ni²⁺ (mg/l) | 270 | 2 |
| Na⁺ (mg/l) | 400 | 120 |
| H₂PO₄⁻(mg/l) | 4500 | 1200 |
| NO₃⁻ (mg/l) | 500 | 220 |

Verblockung Membran nach 3 Stunden
Permeat: < 5 l/m²·h bei 8 bar (33 %)

### B. Nanofiltration Spülwasser: Konditionierung durch Zugabe H₃PO₄⁻ ins Spülwasser: 4,0 g/l H₃PO₄ - 75 % (Säure) (erfindungsgemäß)

### Betriebsbedingungen:

### siehe A.

### Ergebnis:

| | Konzentrat | Filtrat |
|---|---|---|
| pH | 2,3 | 2,1 1 |
| Zn²⁺ (mg/l) | 520 | 1,5 |
| Mn²⁺ (mg/l) | 285 | 0,4 |
| Ni²⁺ (mg/l) | 275 | 0,4 |
| Na⁺ (mg/l) | 460 | 100 |
| H₂PO₄⁻(mg/l) | 10000 | 2000 |
| NO₃⁻ (mg/l) | 520 | 210 |

Verblockung Membran nach 100 Stunden
Permeat: < 5 l/m²·h bei 8 bar (33 %)
Konzentrat wird nach Zugabe von ZnCO₃ oder MnCO₃ (Einstellung pH 2,7) in das Phosphatierbad zurückgeführt. Durch diese Maßnahme kein Anstieg der freien Säure im Phosphatierbad.

Filtrat kann nach Zugabe von NaOH wiederverwendet werden als
- Spülwasser nach Reinigung (Einstellung pH 7) und/oder
- Nachschärflösung der Reinigung (Einstellung pH 10-11) (extra Zugabe von Tensid empfehlenswert)

Konzentration Zn²⁺ / Mn²⁺ / Ni²⁺ im Permeat können deutlich reduziert werden.

### C. Nanofiltration Spülwasser: Konditionierung durch Zugabe HF ins Spülwasser:

### 200 mg/l HF - 70 %

### Betriebsbedingungen:

### siehe A.

### Ergebnis:

| | Konzentrat | Filtrat |
|---|---|---|
| pH | 3,0 | 2,8 |
| Zn²⁺ (mg/l) | 680 | 5,0 |
| Mn²⁺ (mg/l) | 275 | 3,2 |
| Ni²⁺ (mg/l) | 265 | 3,3 |
| Na⁺ (mg/l) | 380 | 110 |
| H₂PO₄⁻(mg/l) | 3600 | 1400 |
| NO₃⁻ (mg/l) | 480 | 240 |
| F⁻ (mg/l) | 290 | 110 |

Verblockung Membran nach 50 Stunden
Permeat: < 5 l/m²·h bei 8 bar (33 %)

### Beispiel 2 (erfindungsgemäß)

Reinigung der Membran mit H₃PO₄ - 5 %ig
Betriebsbedingungen: 1 B

Nach 100 Stunden wurde die Membran gereinigt mit H₃PO₄ - 5 %ig (Raumtemperatur / 20 Minuten / pH 1,2)
Nach der Reinigung wurde die Säure verwendet für die Konditionierung von Spülwasser wie 1 B (60 g/l H₃PO₄ - 5 %ig)

| Analyse: | |
|---|---|
| Zn²⁺ _{:} | 16 ppm |
| Mn²⁺ _{:} | 10 ppm |
| Ni²⁺ _{:} | 12 ppm |
| Fe³⁺ _{:} | 18 ppm |
| H₂PO₄⁻ : | 50 000 ppm |

## Patentansprüche

1. Verfahren zum Aufbereiten von Phosphatierbadüberlauf oder Spülwasser nach einer Phosphatierung mit einer Phosphatierlösung, die 3 bis 50 g/l Phosphationen und 0,2 bis 3 g/l Zinkionen enthält, wobei der Phosphatierbadüberlauf oder das Spülwasser einer Membranfiltration unterworfen wird und wobei das Retentat der Membranfiltration in einem Retentatkreislauf gefahren werden kann, **dadurch gekennzeichnet, daß** man
i) dem Phosphatierbadüberlauf, dem Spülwasser oder dem Retentatkreislauf vor der Membranfiltration ein Reagenz zur Verzögerung der Membranverbtockung zugibt, das ausgewählt ist aus
a) 0,01 bis 5 g/l eines Komplexbildners für Schwermetalle
b) einer Säure in einer solchen Menge, daß der pH-Wert des Spülwassers auf einen Bereich zwischen 0,5 und 2,5 abgesenkt wird, wobei man in diesem Falle das Retentat der Membranfiltration zumindest anteilig in die Phosphatierlösung zurückführt; nachdem man durch Zugabe von Hydroxylamin oder eines Oxids oder eines Carbonats von Zink, Nickel und/oder Mangan den pH-Wert des Retentats auf einen Wert im Bereich von 2,55 bis 3,0 angehoben hat,
und/oder
ii) die Membranfiltration zu ausgewählten Zeitpunkten unterbricht und die Membran mit einer wäßrigen Lösung einer Säure b) behandelt, die einen pH-Wert im Bereich zwischen 0 und 1,8 ausweist, und daß
man die wäßrige Lösung der Säure b) nach Kontakt mit der Filtrationsmembran verwendet, um sie beim anschließenden Verfahren nach Alternative i) dem Phosphatierbadüberlauf, dem Spülwasser oder dem Retentatkreislauf als Reagenz zur Verzögerung der Membranverblockung in einer solchen Menge zuzugeben, daß der pH-Wert des Phosphatierbadüberlaufs oder des Spülwassers auf einen Bereich zwischen 0,5 und 2,5 abgesenkt wird from former claim 9.

2. Verfahren nach Anspruch 1, **dadurch gekennzeichnet, daß** man eine Säure b) verwendet, die ausgewählt ist aus Salpetersäure, Phosphorsäure, Fluorwasserstoffsäure und Säuren, deren Säurereste komplexe Fluoride von B, Si, Ti oder Zr darstellen.

3. Verfahren nach Anspruch 1, **dadurch gekennzeichnet, daß** nach Alternative i) verfahren und dem Phosphatierbadüberlauf, dem Spülwasser oder dem Retentatkreislauf ein Komplexbildner a) zugegeben wird, der ausgewählt ist aus Hydroxycarbonsäuren oder deren Salzen, bei denen die Summe aus Hydroxylgruppen und Carboxylgruppen im Molekül mindestens 3 beträgt.

4. Verfahren nach einem oder mehreren der Ansprüche 1 bis 3, **dadurch gekennzeichnet, daß** nach Alternative i) verfahren und das Permeat der Membranfiltration über einen schwach sauren Ionenaustauscher geleitet wird.

5. Verfahren nach einem oder mehreren der Ansprüche 1 bis 3, **dadurch gekennzeichnet, daß** nach Alternative i) verfahren und das Permeat der Membranfiltration auf einen pH-Wert im Bereich zwischen 6 und 8 eingestellt und als Spülwasser nach der Reinigung der zu phosphatierenden Metalloberflächen eingesetzt wird.

6. Verfahren nach einem oder mehreren der Ansprüche 1 bis 3, **dadurch gekennzeichnet, daß** nach Alternative i) verfahren und das Permeat der Membranfiltration auf einen pH-Wert im Bereich zwischen 9 und 13 eingestellt und zum Ergänzen einer Reinigungslösung für die Reinigung der zu phosphatierenden Metalloberflächen eingesetzt wird.

7. Verfahren nach einem oder mehreren der Ansprüche 1 bis 6, **dadurch gekennzeichnet, daß** nach Alternative i) verfahren wird, wobei man bei Unterschreiten eines vorgewählten Membranflusses oder nach Ablauf einer vorgewählten Zeit das Verfahren unterbricht und die Membran mit einer alkalischen Lösung mit einem pH-Wert im Bereich von 8 bis 14 reinigt und das bei dieser Reinigung anfallende Permeat entweder dazu verwendet, bei weiterer Verfahrensweise nach Alternative i) den pH-Wert des anfallenden sauren Permeats anzuheben, oder es dazu verwendet, eine Reinigerlösung zum Reinigen der zu phosphatierenden Teile vor der Phosphatierung anzusetzen oder zu ergänzen.

8. Verfahren nach Anspruch 7, **dadurch gekennzeichnet, daß** man die Reinigung der Membran mit der alkalischen Lösung derart durchführt, daß 70 bis 90 Volumenprozent der alkalischen Lösung als Permeat die Membran durchdringen.

9. Verfahren nach einem oder mehreren der Ansprüche 1 bis 8, **dadurch gekennzeichnet, daß** die Membranfiltration eine Nanofiltration oder eine Umkehrosmose darstellt.

10. Verfahren nach einem oder mehreren der Ansprüche 1 bis 8, wobei man nach Alternative i) verfährt und als Reagenz zur Verzögerung der Membranverblockung eine Säure ausgewählt aus Salpetersäure, Phosphorsäure, Fluorwasserstoffsäure und Säuren, deren Säurereste komplexe Fluoride von B, Si, Ti oder Zr darstellen, zugibt,
**dadurch gekennzeichnet, daß**
a) man mindestens einen ersten und einen zweiten Pufferbehälter vorsieht, in die das Retentat der Membranfiltration geleitet werden kann,
b) wobei man für eine vorgewählte Zeitdauer oder bis der erste Pufferbehälter gefüllt ist das Retentat der Membranfiltration mindestens teilweise in den ersten Pufferbehälter leitet,
c) nach Ablauf der vorgewählten Zeitdauer oder wenn der erste Pufferbehälter gefüllt ist
d) die Einleitung des Retentats in den ersten Pufferbehälter beendet und das Retentat mindestens teilweise in den zweiten Pufferbehälter leitet,
e) den Wert mindestens eines für die Zusammensetzung des Inhalts des ersten Pufferbehälters charakteristischen Parameters bestimmt und
f) eine solche Menge von Ergänzungschemikalien in den ersten Pufferbehälter gibt, daß der Wert des charakteristischen Parameters derart geändert wird, daß der Inhalt des ersten Pufferbehälters als Ergänzungslösung für die Phosphatierlösung verwendet werden kann,
g) anschließend den Inhalt des ersten Pufferbehälters in die Phosphatierlösung entleert, während man
h) das Retentat der Membranfiltration mindestens teilweise in den zweiten Pufferbehälter leitet, und
k) nach Entleeren des ersten Pufferbehälters und Ablauf der vorgewählten Zeit zum Füllen des zweiten Pufferbehälters, oder wenn dieser gefüllt ist, die Funktion von erstem und zweiten Pufferbehälter vertauscht.

11. Verfahren nach Anspruch 10, **dadurch gekennzeichnet, daß** die vorgewählte Zeitdauer im Bereich von 8 bis 120 Stunden liegt.

12. Verfahren nach einem oder beiden der Ansprüche 10 und 11, **dadurch gekennzeichnet, daß** man als den für die Zusammensetzung des Inhalts des ersten Pufferbehälters charakteristischen Parameter den pH-Wert auswählt und daß man eine solche Menge mindestens einer neutralisierenden Ergänzungschemikalie zugibt, daß ein pH-Wert im Bereich von 2,6 bis 3,6 erhalten wird.

13. Verfahren nach Anspruch 12, **dadurch gekennzeichnet, daß** man als alkalische Ergänzungschemikalie Zink- und/oder Mangancarbonat zugibt.

14. Verfahren nach einem oder mehreren der Ansprüche 1 bis 8, wobei nach Alternative i) verfahren und das Permeat der Membranfiltration auf einen pH-Wert im Bereich zwischen 6 und 13 eingestellt und zum Ergänzen einer Reinigungslösung für die Reinigung der zu phosphatierenden Metalloberflächen eingesetzt wird,
**dadurch gekennzeichnet, daß** man dem Permeat der Membranfiltration eines oder mehrere Tenside, vorzugsweise ausgewählt aus nichtionischen Tensiden, zugibt.

15. Verfahren nach einem oder beiden der Ansprüche 13 und 14, **dadurch gekennzeichnet, daß** man dem Permeat der Membranfiltration zusätzlich Buildersubstanzen zugibt.

## Claims

1. A process for conditioning phosphating bath overflow or rinsing water after phosphating with a phosphating solution containing 3 to 50 g/l phosphate ions and 0.2 to 3 g/l zinc ions, the phosphating bath overflow or the rinsing water being subjected to membrane filtration and the membrane filtration retentate being transportable in a retentate circuit, **characterized in that**
i) a reagent for delaying membrane blockage is added to the phosphating bath overflow, the rinsing water or the retentate circuit before the membrane filtration, said reagent being selected from
a) 0.01 to 5 g/l of a heavy metal complexing agent
b) an acid in such a quantity that the pH of the rinsing water is lowered to a value of 0.5 to 2.5, in which case the membrane filtration retentate is at least partly returned to the phosphating solution after the pH of the retentate has been raised to a value of 2.55 to 3.0 by addition of hydroxylamine or an oxide or a carbonate of zinc, nickel and/or manganese
and/or
ii) the membrane filtration is interrupted at selected times and the membrane is treated with an aqueous solution of an acid b) which has a pH of 0 to 1.8
and **in that**, after contact with the filtration membrane, the aqueous solution of the acid b) is used for addition to the phosphating bath overflow, the rinsing water or the retentate circuit as the reagent for delaying membrane blockage in the subsequent process according to alternative i) in such a quantity that the pH of the phosphating bath overflow or the rinsing water is lowered to a value of 0.5 to 2.5.

2. A process as claimed in claim 1, **characterized in that** an acid b) selected from nitric acid, phosphoric acid, hydrofluoric acid and acids of which the acid residues represent complex fluorides of B, Si, Ti or Zr is used.

3. A process as claimed in claim 1, **characterized in that** alternative i) is adopted and a complexing agent a) selected from hydroxycarboxylic acids or salts thereof where the sum of hydroxyl groups and carboxyl groups in the molecule is at least 3 is added to the phosphating bath overflow, the rinsing water or the retentate circuit.

4. A process as claimed in one or more of claims 1 to 3, **characterized in that** alternative i) is adopted and the membrane filtration permeate is passed over a weakly acidic ion exchanger.

5. A process as claimed in one or more of claims 1 to 3, **characterized in that** alternative i) is adopted and the membrane filtration permeate is adjusted to a pH of 6 to 8 and is used as rinsing water after cleaning of the metal surfaces to be phosphated.

6. A process as claimed in one or more of claims 1 to 3, **characterized in that** alternative i) is adopted and the membrane filtration permeate is adjusted to a pH of 9 to 13 and is used to replenish a cleaning solution for cleaning the metal surfaces to be phosphated.

7. A process as claimed in one or more of claims 1 to 6, **characterized in that** alternative i) is adopted, the process being interrupted when the membrane flow falls below a predetermined value or after a predetermined time and the membrane being cleaned with an alkaline solution having a pH of 8 to 14 and the permeate accumulating during cleaning being used either to raise the pH of the acidic permeate accumulating during the further course of alternative process i) or to prepare or replenish a cleaning solution for cleaning the parts to be phosphated before the phosphating step.

8. A process as claimed in claim 7, **characterized in that** cleaning of the membrane with the alkaline solution is carried out so that 70 to 90% by volume of the alkaline solution pass through the membrane as permeate.

9. A process as claimed in one or more of claims 1 to 8, **characterized in that** the membrane filtration is a nanofiltration or reverse osmosis.

10. A process as claimed in one or more of claims 1 to 8, **characterized in that** alternative i) is adopted and an acid selected from nitric acid, phosphoric acid, hydrofluoric acid and acids of which the acid residues represent complex fluorides of B, Si, Ti or Zr is added as the reagent for delaying membrane blockage, **characterized in that**
a) at least a first and a second buffer tank into which the membrane filtration retentate can be introduced are provided,
b) the membrane filtration retentate is introduced at least partly into the first buffer tank for a predetermined time or until the first buffer tank is full,
c) after the predetermined time or when the first buffer tank is full,
d) introduction of the retentate into the first buffer tank is stopped and the retentate is at least partly introduced into the second buffer tank,
e) the value of at least one parameter characteristic of the composition of the contents of the first buffer tank is determined and
f) replenishing chemicals are introduced into the first buffer tank in such a quantity that the value of the characteristic parameter is changed so that the contents of the first buffer tank can be used as a replenishing solution for the phosphating solution,
g) the contents of the first buffer tank are then emptied into the phosphating solution while
h) the membrane filtration retentate is at least partly introduced into the second buffer tank and,
k) after emptying of the first buffer tank and expiry of the predetermined time for filling the second buffer tank, or when the second buffer tank is full, the functions of the first and second buffer tanks are switched.

11. A process as claimed in claim 10, **characterized in that** the predetermined time is between 8 and 120 hours.

12. A process as claimed in one or both of claims 10 and 11, **characterized in that** the pH value is selected as the parameter characteristic of the composition of the contents of the first buffer tank and at least one neutralizing replenishing chemical is added in such a quantity that a pH of 2.6 to 3.6 is obtained.

13. A process as claimed in claim 12, **characterized in that** zinc and/or manganese carbonate is/are added as the replenishing chemical(s).

14. A process as claimed in one or more of claims 1 to 8, **characterized in that** alternative i) is adopted and the membrane filtration permeate is adjusted to a pH of 6 to 13 and is used to replenish a cleaning solution for cleaning the metal surfaces to be phosphated, **characterized in that** one or more surfactants, preferably selected from nonionic surfactants, is/are added to the membrane filtration permeate.

15. A process as claimed in one or both of claims 13 and 14, **characterized in that** builders are also added to the membrane filtration permeate.

## Revendications

1. Procédé de traitement du trop-plein d'un bain de phosphatation ou de l'eau de rinçage après une phosphatation par une solution de phosphatation qui contient 3 à 50 g/l d'ions phosphate et 0,2 à 3 g/l d'ions de zinc, le trop-plein du bain de phosphatation ou l'eau de rinçage étant soumis à une filtration sur membrane et le rétentat de la filtration sur membrane pouvant être transporté dans un circuit de rétentat, **caractérisé en ce que**
i) on ajoute au trop-plein du bain de phosphatation, à l'eau de rinçage ou au circuit de rétentat, avant la filtration sur membrane, un réactif pour retarder le blocage de la membrane, qui est choisi parmi
a) 0,01 à 5 g/l d'un complexant pour métaux lourds
b) un acide en une quantité telle que le pH de l'eau de rinçage est abaissée dans une plage entre 0,5 et 2,5, en recyclant dans ce cas le rétentat de la filtration sur membrane au moins en partie dans la solution de phosphatation après avoir élevé, par addition d'hydroxylamine ou d'un oxyde ou d'un carbonate du zinc, du nickel et/ou du manganèse, le pH du rétentat à une valeur dans la plage de 2,55 à 3,0,
et/ou
ii) on interrompt la filtration sur membrane à des moments choisis et on traite la membrane avec une solution aqueuse d'un acide b), qui présente un pH dans la plage entre 0 et 1,8 et **en ce qu'**on utilise la solution aqueuse de l'acide b) après le contact avec la membrane de filtration pour l'ajouter lors du procédé consécutif selon la variante i) au trop-plein du bain de phosphatation, à l'eau de rinçage ou au circuit de rétentat comme réactif pour ralentir le blocage de la membrane en une quantité telle que le pH du trop-plein du bain de phosphatation ou de l'eau de rinçage est abaissé dans une plage entre 0,5 et 2,5.

2. Procédé selon la revendication 1, **caractérisé en ce qu'**on utilise un acide b) qui est choisi parmi l'acide nitrique, l'acide phosphorique, l'acide fluorhydrique et des acides dont les radicaux acides représentent des fluorures complexes de B, Si, Ti ou Zr.

3. Procédé selon la revendication 1, **caractérisé en ce qu'**on procède selon la variante i) et qu'on ajoute au trop-plein du bain de phosphatation, à l'eau de rinçage ou au circuit de rétentat un complexant a), qui est choisi parmi les acides hydroxycarboxyliques ou leurs sels, dans lesquels la somme des groupes hydroxyle et des groupes carboxyle dans la molécule est d'au moins 3.

4. Procédé selon l'une ou plusieurs des revendications 1 à 3, **caractérisé en ce qu'**on procède selon la variante i) et qu'on fait passer le perméat de la filtration sur membrane sur un échangeur d'ions faiblement acide.

5. Procédé selon l'une ou plusieurs des revendications 1 à 3, **caractérisé en ce qu'**on procède selon la variante i) et qu'on règle le perméat de la filtration sur membrane à un pH dans la plage entre 6 et 8 et qu'on l'utilise comme eau de rinçage après le nettoyage des surfaces métalliques à phosphater.

6. Procédé selon l'une ou plusieurs des revendications 1 à 3, **caractérisé en ce qu'**on procède selon la variante i) et qu'on règle le perméat de la filtration sur membrane à un pH dans la plage entre 9 et 13 et qu'on l'utilise pour compléter une solution de nettoyage destinée au nettoyage des surfaces métalliques à phosphater.

7. Procédé selon l'une ou plusieurs des revendications 1 à 6, **caractérisé en ce qu'**on procède selon la variante i), dans lequel on interrompt le procédé lorsqu'on passe en dessous d'un débit sur la membrane choisi au préalable ou après l'écoulement d'un laps de temps choisi au préalable et on lave la membrane avec une solution alcaline présentant un pH dans la plage de 8 à 14 et on utilise le perméat formé lors de ce nettoyage soit pour élever le pH du perméat acide formé lorsqu'on procède dans la suite selon la variante i), soit pour produire ou compléter une solution de nettoyage destinée au nettoyage des pièces à phosphater avant la phosphatation.

8. Procédé selon la revendication 7, **caractérisé en ce qu'**on réalise le nettoyage de la membrane avec la solution alcaline de telle manière que 70 à 90% en volume de la solution alcaline traversent la membrane sous forme de perméat.

9. Procédé selon l'une ou plusieurs des revendications 1 à 8, **caractérisé en ce que** la filtration sur membrane est une nanofiltration ou une osmose inverse.

10. Procédé selon l'une ou plusieurs des revendications 1 à 8, dans lequel on procède selon la variante i) et on ajoute comme réactif pour le retardement du blocage de la membrane un acide, choisi parmi l'acide nitrique, l'acide phosphorique, l'acide fluorhydrique et des acides dont les radicaux acides sont des fluorures complexes de B, Si, Ti ou Zr,
**caractérisé en ce que**
a) on prévoit au moins un premier et un deuxième réservoir tampon, dans lesquels peut être transporté le rétentat de la filtration sur membrane,
b) en guidant, pendant un laps de temps choisi au préalable ou jusqu'à ce que le premier réservoir tampon soit rempli, le rétentat de la filtration sur membrane au moins partiellement dans le premier réservoir tampon,
c) après l'écoulement du laps de temps choisi au préalable ou lorsque le premier réservoir tampon est rempli,
d) on termine l'introduction du rétentat dans le premier réservoir tampon et on guide le rétentat au moins partiellement dans le deuxième réservoir tampon,
e) on détermine la valeur d'au moins un paramètre caractéristique de la composition du contenu du premier réservoir tampon et
f) on ajoute une quantité de produits chimiques complémentaires dans le premier réservoir tampon telle que la valeur du paramètre caractéristique est modifiée de telle manière que le contenu du premier réservoir tampon peut être utilisé comme solution complémentaire pour la solution de phosphatation,
g) on vide ensuite le contenu du premier réservoir tampon dans la solution de phosphatation, pendant que
h) on guide le rétentat de la filtration sur membrane au moins partiellement dans le deuxième réservoir tampon et
k) on échange la fonction du premier et du deuxième réservoir tampon après la vidange du premier réservoir tampon et l'écoulement du temps choisi au préalable pour le remplissage du deuxième réservoir tampon ou lorsque celui-ci est rempli.

11. Procédé selon la revendication 10, **caractérisé en ce que** le laps de temps choisi au préalable se situe dans la plage de 8 à 120 heures.

12. Procédé selon l'une des revendications 10 et 11 ou les deux, **caractérisé en ce qu'**on choisit pour le paramètre caractéristique de la composition du contenu du premier réservoir tampon le pH et qu'on ajoute une quantité d'au moins un produit chimique complémentaire de neutralisation telle qu'on obtient un pH dans la plage de 2,6 à 3,6.

13. Procédé selon la revendication 12, **caractérisé en ce qu'**on ajoute comme produit chimique complémentaire alcalin du carbonate de zinc et/ou de manganèse.

14. Procédé selon l'une ou plusieurs des revendications 1 à 8, où on procède selon la variante i) et on règle le perméat de la filtration sur membrane à un pH dans la plage entre 6 et 13 et on l'utilise pour compléter une solution de nettoyage destinée au nettoyage des surfaces métalliques à phosphater **caractérisé en ce qu'**on ajoute au perméat de la filtration sur membrane un ou plusieurs agents tensioactifs, de préférence choisis parmi les agents tensioactifs non ioniques.

15. Procédé selon l'une des revendications 13 et 14 ou les deux, **caractérisé en ce qu'**on ajoute en outre des substances de type builder au perméat de la filtration sur membrane.
